# EUROPÄISCHE PATENTANMELDUNG

(11) **EP 2 810 925 A1**
(43) Veröffentlichungstag der Anmeldung: **10.12.2014**
(21) Anmeldenummer: 13003230.3
(22) Anmeldetag: 25.06.2013
(51) Int. Cl.: C04B 40/02, C09K 8/467, C09K 8/46, C09K 8/473

(54) **Einpressen mit CO2, Aushärtungsbeschleunigung von Zement mit CO2 als Beschleuniger**

(30) Priorität: 04.06.2013 DE 102013009353
(71) Anmelder: Linde Aktiengesellschaft, 80331 München (DE)
(72) Erfinder: Schmand, Ralf, 85716 Unterschleißheim (DE)
(74) Vertreter: Gellner, Bernd

(57) **Zusammenfassung**

Die Erfindung betrifft ein Verfahren zum Einpressen einer Zementsuspension in eine Aufnahme (31), insbesondere eine in einem Untergrund ausgebildete Aufnahme oder eine durch eine Verschalung begrenzte Aufnahme, mit den Schritten: Herstellen einer Zementsuspension (11), wobei die Zementsuspension (11) Zement und Wasser umfasst, und Einpressen der Zementsuspension (11, 13) in die Aufnahme (11). Erfindungsgemäß ist vorgesehen, dass ein Zusatzmittel (12, 14) nach der Herstellung der Zementsuspension (11) mit der besagten Zementsuspension (11) gemischt wird, wobei das Zusatzmittel (12, 14) Kohlendioxid (12, 14) umfasst.

## Beschreibung

Die Erfindung betrifft ein Verfahren zum Einpressen bzw. Einbringen einer Zementsuspension, zumindest aufweisend Wasser und Zement, in eine Aufnahme, insbesondere eine in einem Untergrund (z.B. Erdboden) ausgebildete Aufnahme (z. B. Bohrloch oder ausgehobene Grube), eine durch eine Verschalung begrenzte Aufnahme oder eine sonstige Aufnahme. Die Zementsuspension kann auch weitere Zusatzstoffe aufweisen, wie z.B. eine Gesteinskörnung (Beton).

Ein solches Verfahren umfasst das Herstellen einer Zementsuspension, wobei die Zementsuspension Zement und Wasser umfasst, und das Einpressen der Zementsuspension in die Aufnahme.

Es gibt zahlreiche Möglichkeiten den Boden zu verfestigen, oft genügen diese jedoch nicht den Forderungen nach Wirtschaftlichkeit, Dauerhaftigkeit und Umweltfreundlichkeit. Insbesondere in Kiesen und Sanden wird eine Zementsuspension eingepresst und erstarrt. Damit sinkt die Durchlässigkeit, und es entsteht ein dichtes Zementgebinde. Es gibt dabei verschiedene Verfahren der Zementinjektion, wie z.B. permeation grouting (low pressure grouting), compensation grouting, compaction grouting oder jet grouting. Beim Jet grouting beispielsweise werden Drücke bis zu 600 bar und Durchflussraten der Zementsuspension von bis zu 300 I/min erreicht. Zusatzmittel können die Erstarrungszeit beschleunigen oder die Viskosität vermindern.

Derzeit werden zum Abbinden von Zementinjektionen in verschiedene Bodenarten kostenintensive Beschleuniger, wie zum Beispiel alkalihaltige Verbindungen oder Amine verwendet, die zudem auch umweltgefährdend sind. Alternativ hierzu kann auch das kostengünstigere CO₂ als Beschleuniger eingesetzt werden.

Üblicherweise wird CO₂ in gasförmiger oder flüssiger Form dem Anmachwasser oder dem Zugabewasser zugefügt und dabei darin gelöst (Karbonisierung des Wassers).

Dabei ist es vorteilhaft, möglichst viel CO₂ im Wasser zu lösen, um eine entsprechend hohe Erstarrungsbeschleunigung zu erzielen. Da CO₂ unter Normalbedingungen nur eine geringe Löslichkeit in Wasser aufweist, ist es daher erforderlich, das Kohlendioxid unter hohem Druck in den oben beschrieben Wässern zu lösen. Um ein Ausgasen des Kohlendioxid aus dem Wasser zu vermeiden, muss das mit CO₂ angereicherte Wasser ebenfalls unter hohem Druck mit dem Zement gemischt werden. Diese Art der Herstellung von karbonisierten Wasser und eines solchen schnell erhärtenden Zements erfordert daher einen hohen technischen Aufwand.

Hiervon ausgehend liegt daher der vorliegenden Erfindung die Aufgabe zugrunde, ein technisch einfaches Verfahren zum Einpressen einer schnell erhärtenden Zementsuspension zur Verfügung zu stellen, um das Kohlendioxid als Erstarrungsbeschleuniger druckunabhängig bzw. druckvariabel zum Zement hinzugegeben zu können.

Dieses Problem wird durch ein Verfahren mit den Merkmalen des Anspruchs 1 gelöst.

Danach ist vorgesehen, dass ein Zusatzmittel nach der Herstellung der Zementsuspension mit der besagten Zementsuspension gemischt wird, wobei das Zusatzmittel Kohlendioxid umfasst, und wobei insbesondere das Zusatzmittel dazu vorgesehen und eingerichtet ist, die Erstarrung der Zementsuspension bzw. des Zements zu beschleunigen und/oder die Festigkeit zu erhöhen.

Als Zement wird im Sinne der Erfindung insbesondere ein hydraulisches Bindemittel für Baustoffe wie etwa Mörtel oder Beton bezeichnet, wobei der Zement nach Anrühren mit Wasser selbstständig erstarrt und erhärtet. Als Beton wird im Sinne der Erfindung insbesondere ein Gemisch bezeichnet, das Zement, Wasser und insbesondere eine Gesteinskörnung umfasst.

Ein Vorteil des erfindungsgemäßen Verfahrens ist insbesondere die Möglichkeit, das Zusatzmittel bzw. das Kohlendioxid als Erstarrungsbeschleuniger druckvariabel bzw. druckunabhängig zum Zement beimischen zu können. Dabei kann das Zusatzmittel bzw. das Kohlendioxid beispielsweise bei dem Druck beigemischt werden, mit dem die Zementsuspension in die Aufnahme eingepresst wird. Das Zusatzmittel bzw. das Kohlendioxid kann aber beispielsweise auch bei Normaldruck mit der Zementsuspension vermischt werden.

Ein weiterer Vorteil des erfindungsgemäßen Verfahrens ist die Möglichkeit, das Zusatzmittel bzw. das Kohlendioxid getrennt von dem Zement bzw. der Zementsuspension in die Aufnahme, insbesondere in eine im Untergrund ausgebildete Aufnahme oder eine durch eine Verschalung begrenzte Aufnahme, einbringen zu können und erst in der Aufnahme mit dem Zement bzw. der Zementsuspension zu mischen.

Ein nach dem erfindungsgemäßen Verfahren hergestellte, schnell erhärtende Zementsuspension, insbesondere ein Beton, welcher neben der Zementsuspension eine Gesteinskörnung umfasst, eignet sich besonders zur Verwendung als Spritzbeton, der besonders schnell erhärten und rasch an Festigkeit zunehmen muss.

Eine nach dem erfindungsgemäßen Verfahren hergestellte Zementsuspension eignet sich weiterhin insbesondere als Feinzement, insbesondere als Mikrozement, da das in die Zementsuspension gemischte, im Zusatzmittel enthaltene Kohlendioxid die Viskosität der Zementsuspension herabsetzt.

Das Kohlendioxid kann dabei in gasförmiger, flüssiger oder fester Form oder in Form einer Lösung in einem geeigneten flüssigen Trägermedium im Zusatzmittel vorliegen und mit der Zementsuspension gemischt werden. Unterhalb der kritischen Temperatur von 31°C kann Kohlendioxid unter Druck verflüssigt werden, beispielsweise bei Raumtemperatur mit einem Druck von 60 bar, bei einer Temperatur von -56,6°C mit einem Druck von 5,2 bar bei oder bei einer Temperatur von 31°C mit einem Druck von 73, 8 bar. Beispiele für geeignete Trägermedien umfassen, ohne darauf beschränkt zu sein, Ethanol, Propan, n-Butan, iso-Butan oder eine Mischung aus den vorgenannten Stoffen.

Gemäß einer Ausführungsform der Erfindung liegt nach dem Mischen des Zusatzmittels und der Zementsuspension Kohlendioxid in einer Konzentration von 2 % (w/w) bis 15% (w/w), bevorzugt 5 % (w/w) bis 8 % (w/w), in der Zementsuspension vor. Gemäß einer bevorzugten Ausführungsform der Erfindung wird die gewünschte Endkonzentration des Zusatzmittels in der Zementsuspension durch die Pumpgeschwindigkeit der Pumpen für die Zementsuspension und das Zusatzmittel oder durch Steuerung des Pumpenhinterdruckes der besagten Pumpen eingestellt.

Gemäß einer weiteren Ausführungsform der Erfindung wird das Zusatzmittel mit der Zementsuspension bei einem Druck von mindestens 6 bar, bevorzugt bei einem Druck von 6 bar bis 600 bar, bevorzugter bei einem Druck von 6 bar bis 60 bar, noch bevorzugter bei 15 bar bis 30 bar, gemischt, wobei das Kohlendioxid insbesondere in flüssiger Form, in gelöster Form oder in gasförmiger Form im Zusatzmittel vorliegt. Diese Ausführungsform der Erfindung ist besonders für Schleierinjektionen, bei der die Zementsuspension mit einem Druck von 6 bar bis 60 bar, bevorzugt 15 bar bis 30 bar in den Untergrund eingepresst wird oder für Hockdruckinjektionen, wobei eine Zementsuspension mit bis zu 600 bar in den Untergrund eingepresst wird, geeignet.

Gemäß einer weiteren Ausführungsform der Erfindung wird das Zusatzmittel getrennt von der Zementsuspension in die Aufnahme eingebracht und in der Aufnahme mit der Zementsuspension gemischt. Diese Ausführungsform ermöglicht eine variablere Verfahrensführung beim Einpressen der Zementsuspension in die Aufnahme, insbesondere in eine in einem Untergrund ausgebildete Aufnahme wie etwa ein Bohrloch oder eine Grube.

Gemäß einer weiteren Ausführungsform der Erfindung wird das Zusatzmittel vor, während oder nach dem Einpressen der Zementsuspension mit der besagten Zementsuspension gemischt.

Gemäß einer Ausführungsform der Erfindung wird das Zusatzmittel vor dem Einpressen der Zementsuspension in die Aufnahme eingebracht.

Insbesondere kann die Aufnahme vor dem Einpressen der Zementsuspension mit dem Zusatzmittel gesättigt werden. Eine Sättigung der Aufnahme im Sinne der Erfindung bedeutet insbesondere, dass die Aufnahme mit mindestens 70%, mindestens 80%, mindestens 90%, mindestens 95% oder 100% der maximalen Aufnahmekapazität der besagten Aufnahme für Kohlendioxid unter den Einbringungsbedingungen mit Kohlendioxid gefüllt ist.

Gemäß einer weiteren Ausführungsform umfasst das Zusatzmittel, das vor dem Einpressen der Zementsuspension in die Aufnahme eingebracht wird, festes Kohlendioxid.

Insbesondere kann die Aufnahme vor der Einbringung der Zementsuspension mit festem Kohlendioxid gesättigt werden. Ein Vorteil dieser Ausführungsform ist es, dass die Aufnahme durch Trockeneis technisch sehr einfach mit Kohlendioxid befüllt bzw. gesättigt werden kann.

Weitere Einzelheiten und Vorteile der Erfindung sollen durch die nachfolgenden Figurenbeschreibungen von Ausführungsbeispielen anhand der Figuren erläutert werden.

Es zeigen:
- Fig. 1: eine Ausführungsform des erfindungsgemäßen Verfahrens;
- Fig. 2: eine alternative Ausführungsform des erfindungsgemäßen Verfahrens; und
- Fig. 3: eine weitere Ausführungsform des erfindungsgemäßen Verfahrens.

CO₂ kann ggf. sowohl als Mittel zur Verminderung der Viskosität wie auch als Beschleuniger für die Zementerhärtung eingesetzt werden. Zudem ist CO₂ umweltverträglich und günstig im Vergleich zu den derzeit eingesetzten Beschleunigern.

Versuche an Trocken-Spritzbeton haben gezeigt, dass ca. 7 kg CO₂ pro m³ Spritzbeton (400 kg Zement/m³) benötigt werden um anfallendes Ettringit abzubauen, welches eine Frühverfestigung des Betons verhindert. Um dies mit herkömmlichen Beschleunigern zu erreichen, müssen diese in Mengen von ca. 5% - 8% (w/w) bezogen auf das Gewicht des Zementes hinzugefügt werden. Die Kosten für die herkömmlichen Beschleuniger liegen im Bereich von 30 Euro/m³. Somit würden für 1 m³ Zementinjektion unter Verwendung von herkömmlichen Beschleunigern ca. 75 Euro an Gesamtkosten anfallen. Dem würden bei einer Verwendung von CO₂ als Beschleuniger nur Kosten in Höhe von kleiner 10 Euro gegenüberstehen.

Zudem ist es möglich, dass durch den Einsatz von CO₂ die Viskosität herabgesetzt werden kann, was insbesondere beim Einsatz von Feinzementen wünschenswert sein dürfte, da mit abnehmendem Feinheitsgrad die Kosten für den Feinzement erheblich steigen, andererseits jedoch die Viskosität nur begrenzt durch Wasser vermindert werden kann. Insbesondere bei Mikrozementen muss stets ein Verflüssiger eingesetzt werden, da sonst der Wasser/Zementgehalt-Wert zu hoch ist. Beim Einpressen von Zement in Klüfte ist ein Wasser/Zementgehalt von größer 1 günstig, dagegen beim Einpressen von Zement in Sand oder Kies ein Wasser/Zementgehalt von kleiner 1.

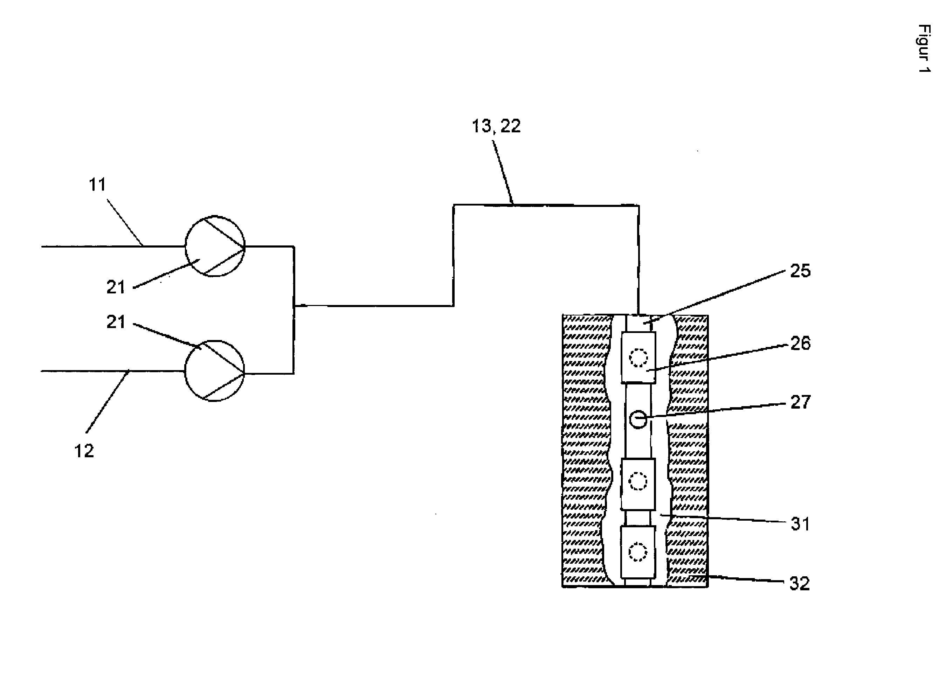

Das CO₂ 12 kann zum Beispiel bei einer Schleierinjektion vorteilhafterweise in flüssiger Form hinter der Pumpe 21 der Zementsuspension 11 beigemischt werden (vgl. Figur 1). Typischerweise wird Zement bzw. eine Zementsuspension 13 bei einer Schleierinjektion mit einem Druck von 6 bar bis 60 bar, bevorzugt 15 bar bis 30 bar, eingepresst. Bei einer Hochdruckinjektion kann Zement bzw. eine Zementsuspension 13 mit bis zu 600 bar eingepresst werden. Bei einer Schleierinjektion wird eine Zementsuspension 13 über ein oder mehrere Bohrlöcher 31 in einen abzudichtenden oder zu stabilisierenden Untergrund 32 bzw. in eine darin befindliche Aufnahme 31 eingepresst bzw. injiziert. Diese Art der Untergrundabdichtung oder Stabilisierung wird auch als Dichtungsschleier bezeichnet. Dazu wird jeweils eine bereitgestellte Zementsuspension 11 und Kohlendioxid 12 durch eine Pumpe 21 in eine Zuleitung 22 befördert, dort gemischt und anschließend über ein Zementinjektionsrohr bzw. Injektionspacker 25 in ein Bohrloch 31 im Erdreich 32 eingepresst. Die Verwendung eines Injektionspackers 25 ermöglicht dabei das kontrollierte Zuführen der Zementsuspension über Öffnungen 27 zu definierten Injektionsstellen im Untergrund bzw. Erdreich 32.

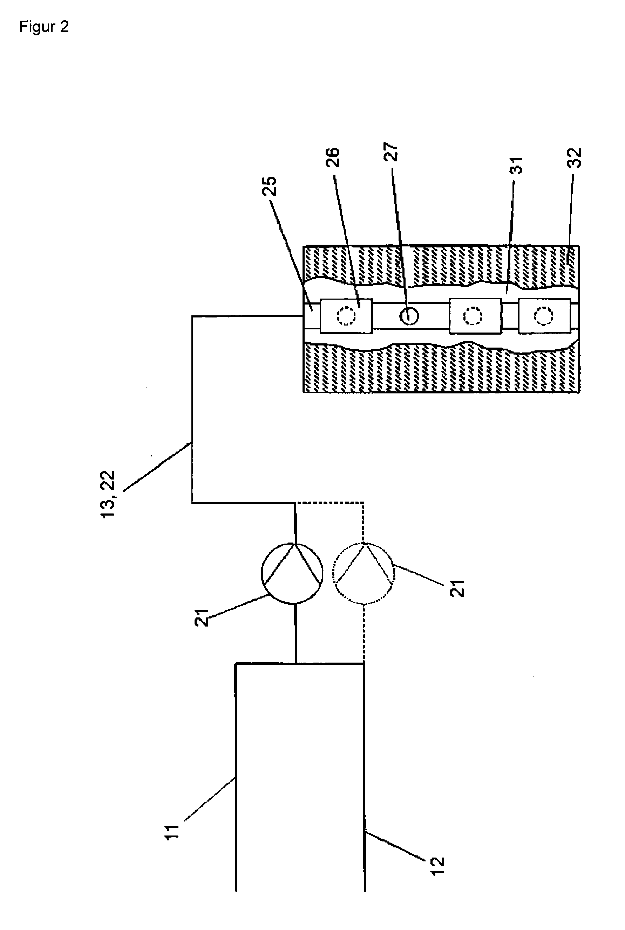

Genauso ist es möglich, das CO₂ 12 in fester Form, etwa als Schnee, Pellets oder als Beimengung eines geeigneten flüssigen Trägermediums, der Zementsuspension 11 beizumischen und zusammen in das Erdreich 32 einzupressen (vgl. Figur 2). Die so erzeugte Mischung 13 aus Zementsuspension 11 und Kohlendioxid 12 wird dann ebenfalls mittels einer Pumpe 21 über eine Zuleitung 23 und ein Zementinjektionsrohr bzw. Injektionspacker 25 in eine Aufnahme 31 im Erdreich 32 eingepresst.

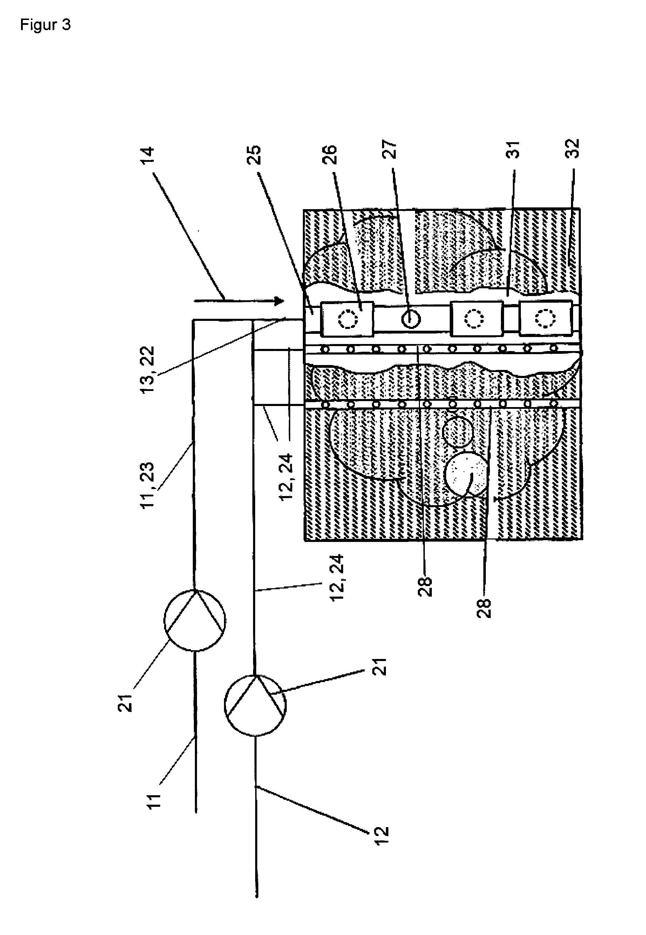

Ferner ist möglich, CO₂ 12 in allen oben genannten Formen getrennt von der Zementsuspension 11 in den Boden 32 einzubringen, also entweder vor dem Einpressen bzw. der Injektion, wobei der Untergrund 32 bzw. die Aufnahme 31 dann vorab mit CO₂ 12 gesättigt wird, nach der Injektion oder auch parallel dazu. Dies kann über dieselben 25 oder über separate Injektionsrohre 28 geschehen (vgl. Figur 3). Vorteilhafterweise kann der Untergrund bzw. das Erdreich 32 vor Injektion bzw. Einpressen der Zementsuspension 11 mit festem CO₂ (Trockeneis) 14 abgesättigt werden. Alternativ kann der Untergrund aber auch mit gasförmigem, flüssigem oder gelöstem Kohlendioxid 12 mittels einer Zuleitung 24 über separate Injektionsrohre 28 gesättigt werden, wobei dann im Untergrund die Zementsuspension 11 und das Kohlendioxid 12 gemischt werden.

**Bezugszeichenliste**

| | |
|---|---|
| 11 | Zementsuspension |
| 12 | Zusatzmittel mit CO2 |
| 13 | Mischung Zementsuspension/Zusatzmittel |
| 14 | Trockeneis für Sättigung des Untergrunds vor der Zementinjektion |
| | |
| 21 | Pumpe |
| 22 | Zuleitung Zementsuspension/Zusatzmittelmischung |
| 23 | Zuleitung Zementsuspension |
| 24 | Zuleitung Kohlendioxid |
| 25 | Zementinjektionsrohr |
| 26 | Gummidichtung |
| 27 | Öffnung für Zementzuführung |
| 28 | CO₂-Injektionsrohr |
| | |
| 31 | Aufnahme (Bohrloch) |
| 32 | Untergrund (Erdreich) |

## Patentansprüche

1. Verfahren zum Einpressen einer Zementsuspension in eine Aufnahme (31), insbesondere eine in einem Untergrund ausgebildete Aufnahme oder eine durch eine Verschalung begrenzte Aufnahme, mit den Schritten:
- Herstellen einer Zementsuspension (11), wobei die Zementsuspension (11) Zement und Wasser umfasst,
- Einpressen der Zementsuspension (11, 13) in die Aufnahme (31),
**dadurch gekennzeichnet,**
**dass** ein Zusatzmittel (12, 14) nach der Herstellung der Zementsuspension (11) mit der besagten Zementsuspension (11) gemischt wird, wobei das Zusatzmittel (12, 14) Kohlendioxid (12, 14) umfasst.

2. Verfahren nach Anspruch 1, **dadurch gekennzeichnet, dass** nach dem Mischen des Zusatzmittels (12,14) und der Zementsuspension (11) Kohlendioxid (12, 14) in einer Konzentration von 2 % (w/w) bis 15% (w/w), bevorzugt 5 % (w/w) bis 8 % (w/w), in der Zementsuspension (13) vorliegt.

3. Verfahren nach Anspruch 1 oder 2, **dadurch gekennzeichnet, dass** das Kohlendioxid (12, 14) im Zusatzmittel (12, 14) beim Mischen des Zusatzmittels mit der Zementsuspension (11) in fester, flüssiger, gelöster und/ oder gasförmiger Form vorliegt.

4. Verfahren nach einem der vorherigen Ansprüche, **dadurch gekennzeichnet, dass** das Zusatzmittel (12) mit der Zementsuspension (11) bei einem Druck von mindestens 6 bar, bevorzugt bei einem Druck von 6 bar bis 600 bar, bevorzugter bei einem Druck von 6 bar bis 60 bar, noch bevorzugter bei einem Druck von 15 bar bis 30 bar, gemischt wird.

5. Verfahren nach einem vorherigen Ansprüche, **dadurch gekennzeichnet, dass** das Zusatzmittel (12, 14) getrennt von der Zementsuspension (11) in die Aufnahme (31) einbracht wird und in der Aufnahme (31) mit der besagten Zementsuspension (11) gemischt wird.

6. Verfahren nach einem der vorherigen Ansprüche, **dadurch gekennzeichnet, dass** das Zusatzmittel (12, 14) vor, während oder nach dem Einpressen der Zementsuspension (11, 13) in die Aufnahme (31) mit der besagten Zementsuspension (11,13) gemischt wird.

7. Verfahren nach Anspruch 5, **dadurch gekennzeichnet, dass** das Zusatzmittel (12, 14) vor dem Einpressen der Zementsuspension (11) in die Aufnahme (31) eingebracht wird.

8. Verfahren nach Anspruch 7, **dadurch gekennzeichnet, dass** das Zusatzmittel (14) festes Kohlendioxid (14) umfasst.
